# EUROPEAN PATENT APPLICATION

(11) **EP 4 564 098 A1**
(43) Date of publication of application: **04.06.2025**
(21) Application number: 24176524.7
(22) Date of filing: 17.05.2024
(51) Int. Cl.: G03G 15/00, H04N 1/00

(54) **IMAGE FORMING APPARATUS**

(30) Priority: 29.11.2023 JP 2023201956
(71) Applicant: FUJIFILM Business Innovation Corp., Minato-ku Tokyo (JP)
(72) Inventor: MIKI, Masayoshi, Yokohama-shi, Kanagawa (JP); OGATA, Kenta, Yokohama-shi, Kanagawa (JP); NARUSHIMA, Kazuhiko, Yokohama-shi, Kanagawa (JP)
(74) Representative: Kurig, Thomas

(57) **Abstract**

An image forming apparatus includes an operation unit that performs an operation related to formation of an image by receiving supply of power, a detection unit that detects an entry of an object into a detection region which is a predetermined range, from the operation unit, and a processor configured to extend a range of the detection region by the detection unit in a case where a job for executing the operation by the operation unit is received, as compared with a case where the job is not received; and change a state of the operation unit according to a detection result by the detection unit.

## Description

### BACKGROUND OF THE INVENTION

### (i) Field of the Invention

The present invention relates to an image forming apparatus.

### (ii) Description of Related Art

JP2021-17003A discloses an image forming apparatus including a box region that temporarily stores print data, a human sensor unit that detects a person present in a detection area, and a mode control unit that controls switching between a normal mode, a light sleep mode, and a deep sleep mode. In the image forming apparatus, it is described that, in a case where the entry of the person into the detection area is detected in a state where the print data is stored in the box region in the deep sleep mode, the image forming apparatus returns to the normal mode, and in a case where the entry of the person into the detection area is detected in a state where the print data is not stored in the box region, the image forming apparatus returns to the light sleep mode.

### SUMMARY OF THE INVENTION

An image forming apparatus including an operation unit that performs an operation related to image formation, may detect an entry of an object such as a user into a predetermined detection region, and change a state of the operation unit according to a detection result. Here, in a case where the range of the detection region is made constant regardless of whether or not the job for executing the operation by the operation unit is received, in a case where the job is not received, erroneous detection is likely to occur in which the state of the operation unit is changed by detecting a person or a thing other than the user who uses the image forming apparatus.

An object of the present invention is to make erroneous detection by the detection unit less likely to occur in a case where the job is not received, as compared with a case where the range of the detection region by the detection unit is made equal in a case where the job is received and in a case where the job is not received.

According to a first aspect of the present disclosure, there is provided an image forming apparatus including: an operation unit that performs an operation related to formation of an image by receiving supply of power; a detection unit that detects an entry of an object into a detection region which is a predetermined range, from the operation unit; and a processor configured to: extend a range of the detection region by the detection unit in a case where a job for executing the operation by the operation unit is received, as compared with a case where the job is not received; and change a state of the operation unit according to a detection result by the detection unit.

According to a second aspect of the present disclosure, there is provided the image forming apparatus according to the first aspect, in which the processor may be configured to: restore the detection region to an original range, in a case where a predetermined extended time has elapsed, after the job is received and then the range of the detection region is extended.

According to a third aspect of the present disclosure, there is provided the image forming apparatus according to the second aspect, in which the processor may be configured to: vary the extended time according to at least one of a type of the job or a state of the job.

According to a fourth aspect of the present disclosure, there is provided the image forming apparatus according to the third aspect, in which the processor may be configured to: set the extended time in a case where a new job is received in a state where a previous job to be executed by the operation unit is present to be shorter than the extended time in a case where the new job is received in a state where the previous job to be executed by the operation unit is not present.

According to a fifth aspect of the present disclosure, there is provided the image forming apparatus according to any one of the first to fourth aspects, in which the operation unit may include an image forming unit that forms an image on a recording medium as the operation, and the processor may be configured to: set the operation unit in a state where the image forming unit is operable, in a case where the detection unit detects the entry of the object into the detection region, after the job is received and then the range of the detection region is extended.

According to a sixth aspect of the present disclosure, there is provided the image forming apparatus according to the fifth aspect, in which the operation unit may further include a display unit that performs display of information related to formation of an image as the operation, and the processor may be configured to: set the operation unit to be in a state where the display unit and the image forming unit are operable, in a case where the entry of the object into the detection region is detected until a predetermined period has elapsed after the job is received and then the range of the detection region is extended; and set the operation unit to be in a state where the display unit is operable, in a case where the entry of the object into the detection region is detected after the period has elapsed.

According to a seventh aspect of the present disclosure, there is provided the image forming apparatus according to any one of the first to sixth aspects, in which the detection unit may detect the entry of the object for each of a plurality of detection sections into which the detection region is divided, and the processor may be configured to: extend the range of the detection region by the detection unit for each of the detection sections, in a case where the job is received.

According to an eighth aspect of the present disclosure, there is provided the image forming apparatus according to the seventh aspect, in which the detection sections for extending the range of the detection region may be set in advance for each type of the job, and the processor may be configured to: extend a range of the detection section that is set in advance, according to a type of the received job.

According to a ninth aspect of the present disclosure, there is provided the image forming apparatus according to the eighth aspect, in which the detection sections for extending the range of the detection region may be set based on a history in which the detection unit has detected the entry of the object in a case where the job is received in the past.

According to a tenth aspect of the present disclosure, there is provided the image forming apparatus according to the ninth aspect, in which the processor may be configured to: in a case where in a job of storing data used for forming an image in a predetermined storage region, an operation of forming the image based on the data is performed by the operation unit, after the data is stored in the storage region, set the detection section in which the detection unit detects presence of the object before the operation, as the detection section for extending the range of the detection region.

According to an eleventh aspect of the present disclosure, there is provided the image forming apparatus according to the seventh aspect, in which the processor may be configured to: set a range of the detection section to be narrow, in a case where the operation by the operation unit is not performed until a predetermined period has elapsed after the detection unit detects presence of the object in the extended detection section.

According to a twelfth aspect of the present disclosure, there is provided the image forming apparatus according to any one of the first to eleventh aspects, in which the processor may be configured to: control the operation unit to be in a normal state where the operation is possible or a low power state where power consumption is lower than in the normal state; and change the operation unit from the low power state to the normal state, in a case where the entry of the object into the detection region is detected in a state where the operation unit is controlled to be in the low power state.

According to a thirteenth aspect of the present disclosure, there is provided the image forming apparatus according to the twelfth aspect, in which the processor may be configured to: control the operation unit to a first low power state and a second low power state where power consumption is larger than in the first low power state as the low power state; change the operation unit from the first low power state to the second low power state, in a case where the entry of the object into the extended detection region is detected in a state where the operation unit is controlled to be in the first low power state; and change the operation unit from the second low power state to the normal state, in a case where the entry of the object into the detection region before the extension is detected in a state where the operation unit is controlled to be in the second low power state.

According to the first aspect of the present invention, it is possible to make the erroneous detection by the detection unit less likely to occur in a case where the job is not received, as compared with a case where the range of the detection region by the detection unit is made equal in a case where the job is received and in a case where the job is not received.

According to the second aspect of the present invention, it is possible to further make the erroneous detection by the detection unit less likely to occur, as compared with a case where the range of the detection region is continuously extended even after the elapse of the extended time.

According to the third aspect of the present invention, it is possible to make the erroneous detection by the detection unit less likely to occur, as compared with a case where the extended time is uniformly set regardless of the type of the job and the state of the job.

According to the fourth aspect of the present invention, it is possible to make the erroneous detection by the detection unit less likely to occur, as compared with a case where the extension period in a case where the new job is received in a state where a previous job to be executed is present is not shortened.

According to the fifth aspect of the present invention, a time for the user to wait until the operation by the image forming unit is started after the user reaches the image forming apparatus can be shortened as compared with a case where the operation unit is not set to the operable state in a case where the detection unit detects the entry of the object.

According to the sixth aspect of the present invention, it is possible to reduce the power consumption in the image forming apparatus as compared with a case where the operation unit is set to the state where the operation unit is set to be in a state where the display unit and the image forming unit are operable in a case where the entry of the object into the detection region is detected, even after the predetermined period has elapsed.

According to the seventh aspect of the present invention, it is possible to make the erroneous detection by the detection unit less likely to occur, as compared with a case where the range of the detection region is not extended for each detection section.

According to the eighth aspect of the present invention, it is possible to make the erroneous detection by the detection unit less likely to occur, as compared with a case where the entire detection region is extended regardless of the type of the job.

According to the ninth aspect of the present invention, the detection section where the user is likely to enter is easily extended, as compared to a case where the detection section is set to be extended without being based on the history in which the detection unit has detected the entry of the object.

According to the tenth aspect of the present invention, the detection section where the user is likely to enter is easily extended, as compared to a case where the detection section in which the detection unit detects the presence of the object before the operation of forming an image is not set as the detection section for extending a range of the detection region.

According to the eleventh aspect of the present invention, it is possible to make the erroneous detection by the detection unit less likely to occur, as compared with a case where the range of the detection section is not narrowed in a case where the operation by the operation unit is not performed.

According to the twelfth aspect of the present invention, a time for the user to wait until the operation by the operation unit is started after the user reaches the image forming apparatus can be shortened as compared with a case where the operation unit is not changed from the low power state to the normal state in a case where the detection unit detects the entry of the object.

According to the thirteenth aspect of the present invention, in a case where the entry of the object into the extended detection region is detected, it is possible to reduce the power consumption in the image forming apparatus as compared with a case where the operation unit is changed from the first low power state to the normal state.

### BRIEF DESCRIPTION OF THE DRAWINGS

Exemplary embodiment(s) of the present invention will be described in detail based on the following figures, wherein:
Fig. 1 is an overall view of an image forming apparatus to which the present exemplary embodiment is applied;
Fig. 2 is a view showing a hardware configuration of a control device;
Fig. 3 is a view showing an outline of a detection operation by a human sensor;
Fig. 4 is a flowchart showing an example of a process performed by an information processing unit;
Figs. 5A and 5B are views showing a range of a detection region by the human sensor;
Fig. 6 is a view showing a relationship between a type of a print job or a state of the print job received by the information processing unit and a first return time and an extended time;
Fig. 7 is a view showing a detection region by the human sensor according to the present exemplary embodiment;
Fig. 8 is a view showing a range of a detection region in a case where the print job is received;
Fig. 9 is a view showing an example of a setting screen, which is a display screen for setting a specific block by an operation input from the user, displayed on the operation display unit;
Fig. 10 is a view showing a detection region by the human sensor according to the present exemplary embodiment;
Fig. 11 is a view showing a relationship between a type of a print job or a state of the print job received by the information processing unit and a second return time, a third return time, and an extended time; and
Fig. 12 is a view showing a range of a detection region in a case where the print job is received.

### DETAILED DESCRIPTION OF THE INVENTION

Hereinafter, exemplary embodiments of the present invention will be described with reference to the accompanying drawings.

### [Exemplary Embodiment 1]

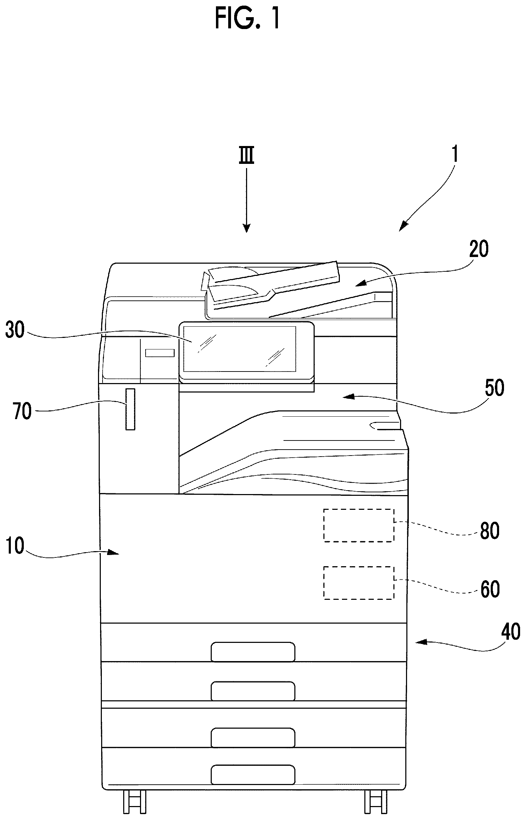

Fig. 1 is an overall view of an image forming apparatus 1 to which the present exemplary embodiment is applied. In Fig. 1, the image forming apparatus 1 is shown such that a front side of the image forming apparatus 1 is a front side of a paper.

The image forming apparatus 1 includes an image forming unit 10 that forms an image on a paper, an image reading unit 20 that reads the image, and an operation display unit 30 that displays information to a user and receives an operation input from the user. In addition, the image forming apparatus 1 includes a paper feeding unit 40 that supplies the paper to the image forming unit 10, and a paper discharging unit 50 that discharges the paper on which the image is formed by the image forming unit 10.

In the image forming apparatus 1 according to the present exemplary embodiment, the image forming unit 10, the image reading unit 20, the operation display unit 30, the paper feeding unit 40, and the paper discharging unit 50 are examples of an operation units that performs operations related to the formation of an image by receiving the supply of power.

Further, the image forming apparatus 1 includes a power supply device 60 that supplies power to units configuring the image forming apparatus 1, a human sensor 70 that detects an entry of a user or the like into a predetermined region from the image forming apparatus 1, and a control device 80 that controls each unit of the image forming apparatus 1.

In the present exemplary embodiment, the image forming unit 10, the image reading unit 20, the operation display unit 30, the paper feeding unit 40, the paper discharging unit 50, the human sensor 70, the control device 80, and the like provided in the image forming apparatus 1 may be described as units configuring the image forming apparatus 1.

The image forming unit 10 forms an image corresponding to a print job on a paper, for example, by an electrophotographic method. The image forming unit 10 includes, for example, a photosensitive member, a charger that charges the photosensitive member, an exposure device that exposes the photosensitive member based on image data, a developer that develops an electrostatic latent image formed on the photosensitive member by being exposed by the exposure device using a toner, and a transfer unit that transfers a toner image developed by the developer onto a paper. Further, the image forming unit 10 includes a fixing unit that fixes the transferred toner image on the paper.

The image reading unit 20 reads the document to generate image data representing the read image.

The operation display unit 30 has a function of displaying information and a function of receiving an operation input from the user. The operation display unit 30 is configured by a touch panel display in which a touch panel is laminated on a display such as a liquid crystal panel. The operation display unit 30 displays a display screen for receiving an operation from the user, and receives an operation input from the user via the display screen. In the present exemplary embodiment, the operation display unit 30 receives an instruction to execute the output process based on the print job, by the operation input from the user.

The power supply device 60 receives the supply of power from a commercial power source (not shown) and supplies the power to each unit configuring the image forming apparatus 1, such as the image forming unit 10, the image reading unit 20, the operation display unit 30, the human sensor 70, and the control device 80.

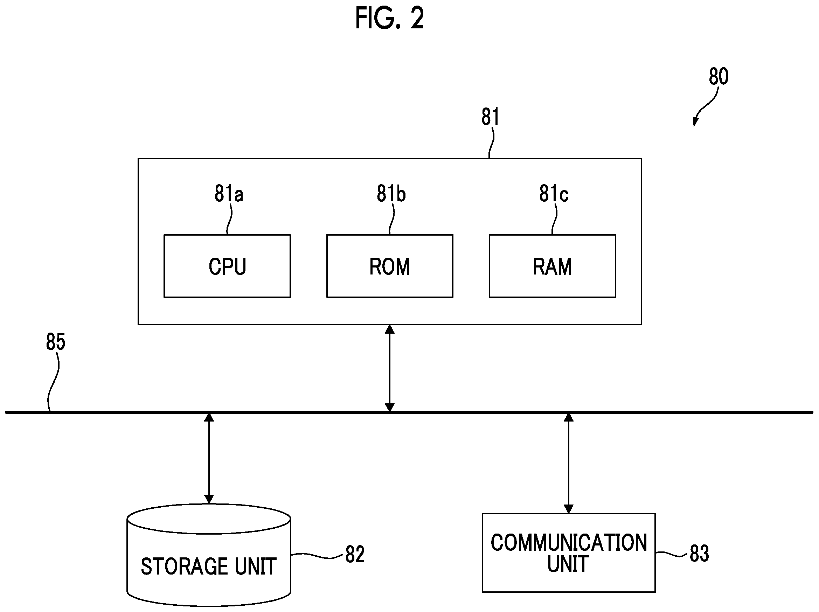

The power supply device 60 according to the present exemplary embodiment supplies power individually to each unit configuring the image forming apparatus 1. It should be noted that the power supply device 60 switches between a state of supplying power and a state of stopping supply of power, individually for each unit configuring the image forming apparatus 1, in response to the control by an information processing unit 81 (see Fig. 2) of the control device 80, described below. Further, the power supply device 60 changes the amount of power supplied to each unit, in response to the control by the information processing unit 81.

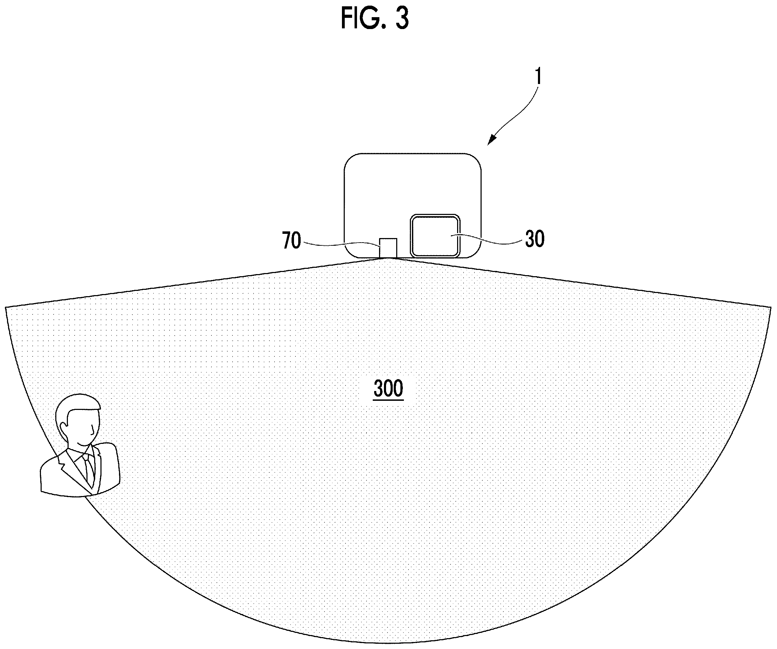

The human sensor 70 detects the presence of a user or the like that has entered a predetermined detection region 300 (see Fig. 3 described below) around the image forming apparatus 1. The human sensor 70 is an example of the detection unit.

The configuration of the human sensor 70 and the detection region 300 by the human sensor 70 will be described in detail later.

Fig. 2 is a view showing a hardware configuration of the control device 80.

The control device 80 includes an information processing unit 81 that processes information, a storage unit 82 that stores information, and a communication unit 83 that performs communication with an external device such as a personal computer (PC). In addition, in the control device 80, the information processing unit 81, the storage unit 82, and the communication unit 83 are connected to a bus 85, and data is transmitted and received via the bus 85.

The information processing unit 81 is configured with a central processing unit (CPU) 81a, a read only memory (ROM) 81b, and a random access memory (RAM) 81c.

The CPU 81a is an example of a processor, and implements each function of the control device 80, by loading various programs stored in the ROM 81b or the like to the RAM 81c and executing the programs. The RAM 81c is a memory that is used as a work memory or the like of the CPU 81a. The ROM 81b is a memory that stores various programs or the like executed by the CPU 81a.

Here, a program executed by the CPU 81a may be provided in a state of being stored in a computer-readable recording medium such as a magnetic recording medium (a magnetic tape, a magnetic disk, or the like), an optical recording medium (an optical disk or the like), a magnetooptical recording medium, or a semiconductor memory. In addition, the program executed by the CPU 81a may be provided by using communication means, such as the Internet.

The information processing unit 81 receives the print job from an external device, such as a PC, connected via the communication unit 83, for example. The print job is a series of processes performed by the image forming apparatus 1.

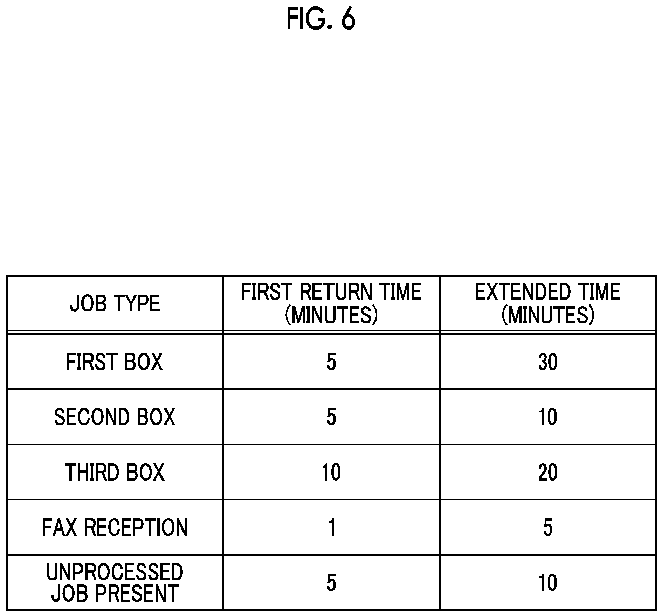

Examples of the print job received by the information processing unit 81 include a print job of performing the output process after the image data acquired from the PC or the like via the communication unit 83 is stored in a predetermined storage region of the storage unit 82. In the present exemplary embodiment, the storage unit 82 has a plurality of boxes (first box, second box, and third box, see also Fig. 6 described below) as a predetermined storage region. The first box, the second box, and the third box are created for each user who uses the image forming apparatus 1, and information about the user is associated with each of the boxes.

A user who tries to execute the print job in the image forming apparatus 1 issues an instruction to execute the print job by using a PC or the like connected to the image forming apparatus 1. Specifically, the user inputs information about the box in which the image data is stored in the storage unit 82, information about the type of the output process performed by the print job, the image data used for the output process, and the like, by using the PC or the like connected to the image forming apparatus 1.

The information about the box is, for example, information for specifying the box in which the image data is stored, among the plurality of boxes determined in the storage unit 82.

The type of the output process performed by the print job is not particularly limited, and examples of the type include a print process of forming an image on the paper by the image forming unit 10 based on the image data, and a transmission process of transmitting the image data to other devices connected to the image forming apparatus 1 via the communication unit 83. Further, examples of the transmission destination by the transmission process include transmission of the image data to the PC or the other image forming apparatus 1, and FAX transmission of the image data.

In addition, the output process performed by these print jobs is an example and is not particularly limited.

The information processing unit 81 acquires information about the box, information about the type of the output process performed by the print job, and the image data used for the output process, and receives the print job.

In a case where the print job is received, the information processing unit 81 stores the acquired image data in the box of the storage unit 82 specified by the information about the box.

After that, in a case where the user operates the operation display unit 30 and issues an instruction to execute the output process based on the print job, the information processing unit 81 controls each unit of the image forming apparatus 1 to execute the output process.

Further, examples of the print job received by the information processing unit 81 include a FAX reception process of storing image data received via FAX through the communication unit 83 in a predetermined storage region of the storage unit 82 and then forming an image on a paper by the image forming unit 10 based on the image data.

For example, in a case where FAX is received, the information processing unit 81 notifies that FAX is received, through the display screen of the operation display unit 30 or the communication unit 83, or a PC or the like connected to the image forming apparatus 1. After that, in a case where the user operates the operation display unit 30 and issues an instruction to perform the output process based on the print job, the information processing unit 81 controls each unit of the image forming apparatus 1 to form the image on the paper based on the image data received via FAX.

Further, the information processing unit 81 according to the present exemplary embodiment switches the image forming apparatus 1 to a plurality of power modes in which the aspect of the power supply to each unit by the power supply device 60 is different. In other words, the information processing unit 81 switches the image forming apparatus 1 to a plurality of power modes having different power consumption.

In the present exemplary embodiment, the information processing unit 81 switches the power mode of the image forming apparatus 1 between a normal mode and a low power mode in which power consumption is lower than in the normal mode, as the plurality of power modes.

The normal mode means a state where power is supplied to each unit configuring the image forming apparatus 1 by the power supply device 60, and each unit configuring the image forming apparatus 1 can perform a predetermined operation. The normal mode is an example of a normal state.

For example, in a case where the image forming apparatus 1 is in a normal mode, by supplying power to the operation display unit 30, the operation display unit 30 can display a predetermined display screen and can receive the operation input of the user via the display screen.

Further, in a case where the image forming apparatus 1 is in the normal mode, for example, with an operation input by the user to the operation display unit 30 or the like as a trigger, an operation of forming an image on the paper by the image forming unit 10, an operation of reading the document by the image reading unit 20, or the like can be started. It should be noted that, in a case where the image forming apparatus 1 is in the normal mode, the output process based on the print job can be performed.

The low power mode means a state where the power consumption is lower than in the normal mode, by partially stopping the supply of power to each unit configuring the image forming apparatus 1 by the power supply device 60 or reducing the amount of power supplied to each unit. The low power mode is an example of a low power state.

In a case where the image forming apparatus 1 is in the low power mode, the amount of power supplied to each unit of the image forming apparatus 1 is reduced, except for the control device 80 and the human sensor 70. Thus, in a case where the image forming apparatus 1 is in the low power mode, the display screen is not displayed on the operation display unit 30. Further, in a case where the image forming apparatus 1 is in the low power mode, the operation of forming an image on the paper by the image forming unit 10 and the operation of reading the document by the image reading unit 20 cannot be performed.

In the image forming apparatus 1 according to the present exemplary embodiment, the power mode is switched by the information processing unit 81, based on the operation of each unit configuring the image forming apparatus 1, the detection result by the human sensor 70, and the like.

For example, in a case where the operations of the image forming unit 10, the image reading unit 20, the operation display unit 30, and the like are not performed within a predetermined period, the image forming apparatus 1 switches the power mode to the low power mode by the information processing unit 81.

Further, in a case where the human sensor 70 detects the entry of the user into the detection region 300 (see Fig. 3) to be described later, the image forming apparatus 1 switches the power mode from the low power mode to the normal mode by the information processing unit 81. In the present exemplary embodiment, in a case where the power mode is switched to the normal mode, at least the operation display unit 30 is supplied with power and the display screen is displayed, so that the image forming apparatus 1 can perform the operation with respect to the operation display unit 30.

Here, the switching of the power mode in the image forming apparatus 1 is not immediately performed. That is, after the power mode switching process is started by the information processing unit 81, it takes time until the power mode is switched from the low power mode to the normal mode.

Hereinafter, the time required for the power mode of the image forming apparatus 1 to be switched from the low power mode to the normal mode may be referred to as a switching time.

Subsequently, a configuration of the human sensor 70 and an outline of a detection operation by the human sensor 70 will be described.

Fig. 3 is a view showing an outline of the detection operation by the human sensor 70. Fig. 3 corresponds to a view of the image forming apparatus 1 shown in Fig. 1 as seen from a III direction. That is, Fig. 3 corresponds to a view of the image forming apparatus 1 as seen from above.

The human sensor 70 detects the presence of the user or the like that has entered a predetermined region around the image forming apparatus 1. As the human sensor 70, for example, a distance measurement sensor including a light source that emits light to a predetermined region and a light receiving unit that receives reflected light reflected from the light emitted from the light source can be used.

As shown in Fig. 3, the human sensor 70 emits light to a predetermined region on the front side of the image forming apparatus 1. Hereinafter, a region in which the human sensor 70 can detect the presence of the user or the like by irradiating light is referred to as a detection region 300. That is, the human sensor 70 irradiates the detection region 300 on the front side of the image forming apparatus 1 with light.

In this example, the detection region 300 has a fan-shaped shape that spreads out on the front side of the image forming apparatus 1 with the human sensor 70 as the center, in a case where the image forming apparatus 1 is viewed from above. In addition, in this example, the central angle of the fan-shaped detection region 300 is an angle of 150 degrees or more and 180 degrees or less. In addition, the shape of the detection region 300 is not particularly limited, but is preferably a fan shape because the user who has moved toward the image forming apparatus 1 can be detected regardless of the moving direction of the user.

In a case where a user who uses the image forming apparatus 1 enters the detection region 300, the light emitted from the human sensor 70 is reflected by the user. The human sensor 70 detects the presence of the user in the detection region 300 by receiving the reflected light reflected by the user who has entered the detection region 300. Then, the human sensor 70 outputs a result of detecting the presence of the user in the detection region 300 to an information processing unit 81 (see Fig. 2) of the control device 80, described below.

In a case where the presence of the user is detected in the detection region 300 by the human sensor 70, the information processing unit 81 starts a process of switching the power mode of the image forming apparatus 1 from the low power mode to the normal mode.

Here, a case where the user issues an instruction to execute the print job from the PC connected to the image forming apparatus 1 via the communication unit 83 will be considered.

First, the user operates the PC to issue an instruction to the image forming apparatus 1 to execute the print job. Thus, the image forming apparatus 1 receives the print job. After that, the user moves to the front of the image forming apparatus 1 and issues an instruction regarding the output of the print job by the operation input to the operation display unit 30. Thus, in the image forming apparatus 1, the output process of the image data based on the print job is executed by the image forming unit 10 or the like.

In the image forming apparatus 1 according to the present exemplary embodiment, in a case where the output process of the image data based on the print job is executed, it is necessary to switch the power mode to the normal mode.

As described above, in order to switch the power mode of the image forming apparatus 1 from the low power mode to the normal mode, a switching time is required. For example, in a case where the user who has issued an instruction to execute the print job moves to the front of the image forming apparatus 1 and then an attempt is made to switch the power mode of the image forming apparatus 1 from the low power mode to the normal mode, the user needs to wait in front of the image forming apparatus 1 until the switching of the power mode is completed and the operation input to the operation display unit 30 is enabled.

On the other hand, in the present exemplary embodiment, in a case where the entry of the user into the detection region 300 is detected, the process of switching the power mode of the image forming apparatus 1 from the low power mode to the normal mode is started. Thus, the time for the user to wait until the operation input to the operation display unit 30 is enabled after the user reaches the front of the image forming apparatus 1 is shortened.

Here, as the range of the detection region 300 is wider, the user enters the detection region 300 at a position further away from the image forming apparatus 1. In this case, it takes time for the user to reach the front of the image forming apparatus 1 after the entry of the user into the detection region 300 is detected by the human sensor 70. Therefore, switching the power mode of the image forming apparatus 1 from the low power mode to the normal mode becomes easier to complete while the user reaches the front of the image forming apparatus 1. As a result, the time for the user to wait until the operation input to the operation display unit 30 is enabled after the user reaches the front of the image forming apparatus 1 is further shortened.

On the other hand, in a case where the range of the detection region 300 is wide, a person other than the user who tries to perform the output process based on the print job by using the image forming apparatus 1 is easily detected by the human sensor 70. For example, in a case where a passage through which a person passes or a desk at which a person works is present around the image forming apparatus 1, in a case where the range of the detection region 300 is wide, the presence of the person who passes through the passage or the person who works at the desk is easily detected by the human sensor 70.

Then, in a case where the image forming apparatus 1 detects a person other than the user by the human sensor 70 in a case where the image forming apparatus 1 does not receive the print job, the power mode of the image forming apparatus 1 is switched from the low power mode to the normal mode, even though there is a high possibility that the output process is not performed in the image forming apparatus 1 thereafter.

In addition, in the following description, a case where the object is detected by the human sensor 70 and the power mode of the image forming apparatus 1 is switched from the low power mode to the normal mode, even though the output process based on the print job is not performed, may be referred to as erroneous detection.

In the image forming apparatus 1, in a case where the erroneous detection by the human sensor 70 is performed, the power consumption of the image forming apparatus 1 is likely to increase.

On the other hand, in the image forming apparatus 1 according to the present exemplary embodiment, in a case where the print job is received, the range of the detection region 300 by the human sensor 70 is extended, as compared with a case where the print job is not received. Thus, the erroneous detection by the human sensor 70 in a case where the print job is not received is less likely to occur, as compared with a case where the range of the detection region 300 by the human sensor 70 is made equal in a case where the print job is received and in a case where the print job is not received.

Hereinafter, in the image forming apparatus 1 according to the present exemplary embodiment, a process for the information processing unit 81 to expand the range of the detection region 300 in a case where the print job is received will be specifically described.

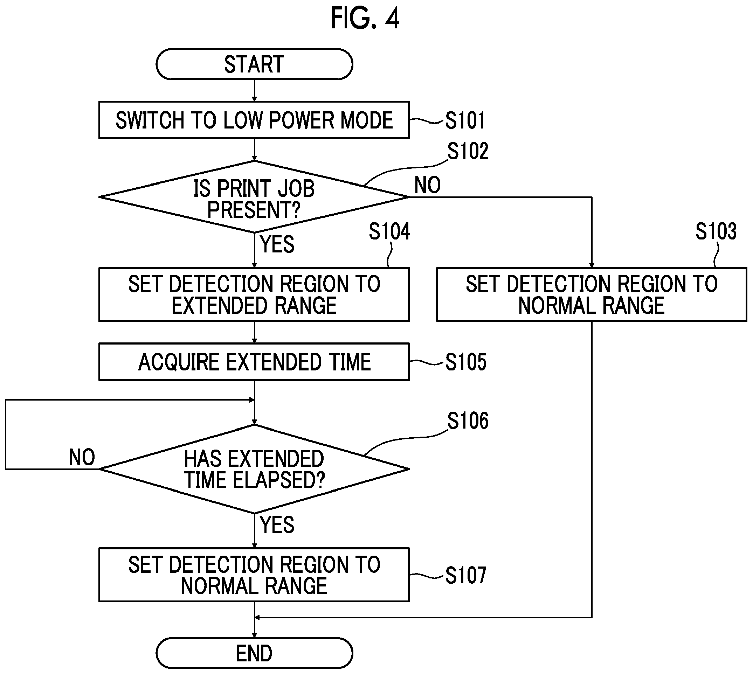

Fig. 4 is a flowchart showing an example of a process performed by the information processing unit 81.

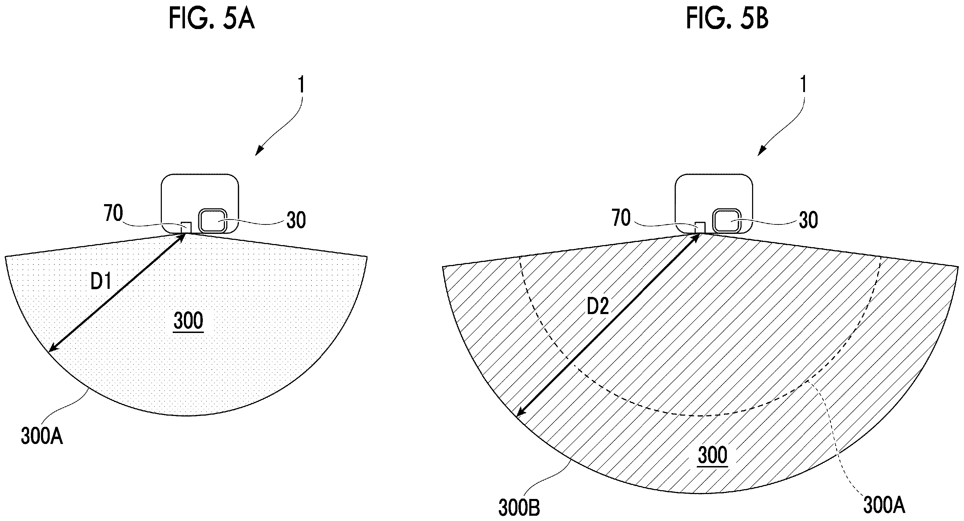

Figs. 5A and 5B are views showing a range of the detection region 300 by the human sensor 70. Fig. 5A shows a range of the detection region 300 in a case where the image forming apparatus 1 does not receive the print job, and Fig. 5B shows a range of the detection region 300 in a case where the image forming apparatus 1 receives the print job. Figs. 5A and 5B correspond to views of the image forming apparatus 1 as seen from above.

In a case where the operations of the image forming unit 10, the image reading unit 20, the operation display unit 30, and the like of the image forming apparatus 1 are not performed within a predetermined period, the information processing unit 81 switches the power mode of the image forming apparatus 1 to the low power mode (step S101).

Next, the information processing unit 81 determines whether or not the print job has been received (step S102).

In a case where the image forming apparatus 1 does not receive the print job (NO in step S102), the information processing unit 81 sets the detection region 300 by the human sensor 70 to the predetermined normal range 300A (step S103).

As shown in Fig. 5A, the normal range 300A is a fan-shaped range that spreads out on the front side of the image forming apparatus 1 with the human sensor 70 as a center, and is a range in which the distance from the human sensor 70 is equal to or less than the distance D1. The distance D1 is a radius of the fan-shaped normal range 300A, that is, a distance from the human sensor 70 to the outer peripheral edge of the normal range 300A.

On the other hand, in a case where the image forming apparatus 1 receives the print job (YES in step S102), the information processing unit 81 sets the detection region 300 by the human sensor 70 to the extended range 300B that is wider than the normal range 300A (step S104). It should be noted that the information processing unit 81 extends the range of the detection region 300 by the human sensor 70 as compared with a case where the image forming apparatus 1 does not receive the print job.

As shown in Fig. 5B, the extended range 300B is a fan-shaped range that spread out on the front side of the image forming apparatus 1 with the human sensor 70 as a center, and is a range in which the distance from the human sensor 70 is equal to or less than the distance D2. The distance D2 of the extended range 300B is larger than the distance D1 of the normal range 300A (D2 > D1). The distance D2 is a radius of the fan-shaped extended range 300B, that is, a distance from the human sensor 70 to the outer peripheral edge of the extended range 300B.

In addition, in this example, the central angle is not changed between the extended range 300B and the normal range 300A, which have the fan shape.

Next, the information processing unit 81 acquires the extended time, which is the time for setting the detection region 300 to the extended range 300B, from the storage unit 82 (step S105).

In the present exemplary embodiment, the extended time is determined in advance according to the type of the print job and the state of the print job in the image forming apparatus 1, and is stored in the storage unit 82. In addition, the extended time will be described in detail later.

Next, after setting the detection region 300 by the human sensor 70 to the extended range 300B in step S104, the information processing unit 81 determines whether or not the extended time acquired in step S 105 has elapsed (step S106).

In a case where the extended time has not elapsed (NO in step S106), the information processing unit 81 continues to perform the process of step S106 until the extended time has elapsed.

On the other hand, in a case where the extended time has elapsed (YES in step S106), the information processing unit 81 sets the detection region 300 by the human sensor 70 to the normal range 300A (step S107).

As described above, the information processing unit 81 ends a series of processes of setting the range of the detection region 300 by the human sensor 70.

Further, after setting the detection region 300 to the normal range 300A in steps S103 and S107 and after setting the detection region 300 to the extended range 300B in step S104, the information processing unit 81 controls the power mode of the image forming apparatus 1 according to the detection result by the human sensor 70.

It should be noted that, in a case where the information processing unit 81 detects the entry of the user or the like into the detection region 300 by the human sensor 70, the information processing unit 81 switches the power mode of the image forming apparatus 1 from the low power mode to the normal mode. Further, in a case where the human sensor 70 does not detect the entry of the user or the like into the detection region 300, the information processing unit 81 continues to set the power mode of the image forming apparatus 1 to the low power mode.

As described above, the image forming apparatus 1 to which the present exemplary embodiment is applied includes each unit that performs an operation related to the formation of an image by receiving the supply of power, such as the image forming unit 10 and the operation display unit 30, the human sensor 70 that detects the entry of the object in the detection region 300, which is a predetermined range, from the image forming unit 10, and the information processing unit 81. In a case where the print job is received, the information processing unit 81 extends the range of the detection region 300 by the human sensor 70 and changes the state of the image forming unit 10 or the operation display unit 30 according to the detection result by the human sensor 70, as compared with a case where the print job is not received.

Here, in the example described above, as an aspect in which in a case where the print job is received, the range of the detection region 300 by the human sensor 70 is extended as compared with a case where the print job is not received, a case is described in which a region in which the presence of the user or the like can be detected by the human sensor 70 is extended. In addition, in the above-described example, in a case where the print job is not received, the human sensor 70 cannot detect the presence of the user or the like outside the normal range 300A. On the other hand, in a case where the print job is received, the presence of the user or the like in the extended range 300B outside the normal range 300A can be detected by the human sensor 70 by extending the range of the detection region 300.

The aspect in which the range of the detection region 300 by the human sensor 70 is extended in a case where the print job is received, as compared with a case where the print job is not received, includes the following aspects. That is, without changing a region in which the presence of the user or the like can be detected by the human sensor 70 regardless of whether or not the print job is received, a range in which the information processing unit 81 performs a process of switching the power mode of the image forming apparatus 1 may be changed based on the detection result by the human sensor 70, in a case where the print job is received and a case where the print job is not received.

With reference to Fig. 5B, the presence of the user or the like who enters the normal range 300A and the extended range 300B can be detected by the human sensor 70 regardless of whether or not the print job is received.

Then, in a case where the print job is not received and the position of the user or the like detected by the human sensor 70 is the normal range 300A, the information processing unit 81 switches the power mode of the image forming apparatus 1 from the low power mode to the normal mode. On the other hand, in a case where the position of the user or the like detected by the human sensor 70 is outside the normal range 300A, the information processing unit 81 does not perform the process of switching the power mode of the image forming apparatus 1.

Further, in a case where the print job is received, the information processing unit 81 switches the power mode of the image forming apparatus 1 from the low power mode to the normal mode, in a case where the position of the user or the like detected by the human sensor 70 in the extended range 300B outside the normal range 300A as well as the normal range 300A.

Subsequently, an extended time, which is a time for setting the detection region 300 by the human sensor 70 to the extended range 300B in a case where the information processing unit 81 receives the print job, will be described.

As described above, in the present exemplary embodiment, in a case where the information processing unit 81 receives the print job, the information processing unit 81 sets the range of the detection region 300 by the human sensor 70 to the extended range 300B that is wider than the normal range 300A. Thus, the time for the user to wait until the operation input to the operation display unit 30 is enabled after the user reaches the front of the image forming apparatus 1 can be shortened.

On the other hand, in a case where the information processing unit 81 continuously sets the detection region 300 by the human sensor 70 to the extended range 300B until the output process based on the print job is completed after receiving the print job, the erroneous detection by the human sensor 70 is likely to occur.

On the other hand, in the present exemplary embodiment, in a case where the predetermined extended time has elapsed after the information processing unit 81 receives the print job and then sets the detection region 300 by the human sensor 70 to the extended range 300B, the information processing unit 81 sets the detection region 300 to the normal range 300A. Thus, in a case where the output process based on the print job is not performed after the information processing unit 81 receives the print job, the erroneous detection by the human sensor 70 is prevented.

Here, a time until the user operates the image forming apparatus 1 to start the output process based on the print job after the information processing unit 81 receives the print job may vary depending on the type of the print job received by the information processing unit 81, the state of the print job, or the like.

For example, in a print job in which the image data is stored in the box and then the output process is performed, the user is likely to move to the front of the image forming apparatus 1 and start the output process based on the print job, before a long time has elapsed after issuing an instruction to execute the print job by using the PC or the like.

On the other hand, in the print job of forming an image on a paper based on the image data received via FAX, a time until the user moves to the front of the image forming apparatus 1 and starts the output process based on the print job after the user receives the print job via FAX by the image forming apparatus 1 is likely to be a long time. In this case, in a case where the detection region 300 by the human sensor 70 is continuously set to the extended range 300B even though the possibility that the user performs the output process based on the print job is low, a person other than the user enters into the detection region 300, and erroneous detection by the human sensor 70 is likely to occur.

The information processing unit 81 according to the present exemplary embodiment varies the extended time according to the type of the received print job. Specifically, in a case where the received print job is a print job of forming an image on paper based on the image data received via FAX, the information processing unit 81 shortens the extended time as compared with a case of a print job in which the image data is stored in the box and then the output process is performed. In a case where the received print job is a print job in which the image data is stored in the box and then the output process is performed, the information processing unit 81 can set the extended time to, for example, 30 minutes. Further, in a case where the received print job is a print job of forming an image on paper based on the image data received by FAX, the information processing unit 81 can set the extended time to, for example, 5 minutes.

Thus, in a case where the information processing unit 81 receives the print job for which the possibility that the user performs the output process based on the print job is low, a person other than the user is prevented from entering the detection region 300, and the erroneous detection by the human sensor 70 is less likely to occur.

In a case where a plurality of boxes for storing the image data used for the output process based on the print job are present, the extended time may be made different for each box.

Further, even in a case where the received print job is a print job in which the image data is stored in the box and then the output process is performed, in a case where the other print jobs received in the past by the information processing unit 81 remain in the same box without the output process being performed, the user is unlikely to start the output process based on the newly received print job. In this case, in a case where the detection region 300 by the human sensor 70 is continuously set to the extended range 300B even though the possibility that the user performs the output process based on the print job is low, a person other than the user enters into the detection region 300, and erroneous detection by the human sensor 70 is likely to occur.

The information processing unit 81 according to the present exemplary embodiment varies the extended time according to the state of the print job in the image forming apparatus 1. Specifically, the information processing unit 81 sets the extended time in a case where a new print job for the same box is received in a state where another print job before the output process is performed remains in the box to be shorter than the extended time in a case where the new print job is received in a state where the other print job is not present. The information processing unit 81 can set the extended time in a case where a new print job for the same box is received in a state where another print job before the output process is performed remains in the box, for example, to 10 minutes. Further, as described above, the information processing unit 81 can set the extended time in a case where a new print job is received in a state where another print job is not present, for example, to 30 minutes.

Thus, in a case where there is a low possibility that the user performs the output process based on the print job depending on the state of the print job in the image forming apparatus 1, a person other than the user is prevented from entering the detection region 300, and the erroneous detection by the human sensor 70 is less likely to occur.

### (Modification Example of Exemplary Embodiment 1)

In the above-described exemplary embodiment, a case is described in which at least the operation display unit 30 is set to be in the operable state, in a case where the human sensor 70 detects the entry of the user into the detection region 300 and the power mode of the image forming apparatus 1 is switched from the low power mode to the normal mode. In general, a user who tries to perform the output process based on the print job in the image forming apparatus 1 first operates the operation display unit 30, after moving to the front of the image forming apparatus 1. Therefore, in a case where the human sensor 70 detects the entry of the user into the detection region 300, and at least the operation on the operation display unit 30 is enabled, an increase in time for the user to wait after reaching the front of the image forming apparatus 1 is prevented.

On the other hand, in a case where the output process based on the print job is a process of forming an image on the paper with the image forming unit 10 based on the image data, in a case where the output process is performed, it is necessary to supply power to the image forming unit 10 to put the image forming unit 10 in a state where the image forming unit 10 can perform an operation of forming an image on the paper. In order to put the image forming unit 10 in a state where the image forming unit 10 can operate, for example, it is necessary to supply power to the image forming unit 10 to heat the fixing unit to a predetermined temperature in advance, which may take time.

On the other hand, after the information processing unit 81 sets the detection region 300 by the human sensor 70 to the extended range 300B after receiving the print job, in a case of switching the power mode of the image forming apparatus 1 to the normal mode based on the detection result by the human sensor 70, the information processing unit 81 may set the operation display unit 30 and the image forming unit 10 to an operable state. Thus, a time for the user to wait until the output process based on the print job is started by the image forming unit 10 after the user reaches the front of the image forming apparatus 1 is shortened.

Further, for example, in a case where a predetermined time (hereinafter, referred to as a first return time) has elapsed, after the print job is received and then the detection region 300 by the human sensor 70 is set to the extended range 300B, and in a case of switching the power mode of the image forming apparatus 1 from the low power mode to the normal mode based on the detection result by the human sensor 70, it is preferable that the information processing unit 81 sets only the operation display unit 30 to be in an operable state.

In other words, in a case where the image forming apparatus 1 is switched from the low power mode to the normal mode in a period until the first return time has elapsed after the detection region 300 is set to the extended range 300B, the information processing unit 81 sets the operation display unit 30 and the image forming unit 10 to be in the operable state. Further, in a case where the image forming apparatus 1 is switched from the low power mode to the normal mode after the first return time has elapsed since the detection region 300 is set to the extended range 300B, the information processing unit 81 sets only the operation display unit 30 to be in the operable state.

In order to set the image forming unit 10 to be in the operable state, it is necessary to perform the heating or the like of the fixing unit as described above, and there is a tendency that the power consumption is larger than in a case of setting the operation display unit 30 to be in an operable state. In a case where the operation display unit 30 and the image forming unit 10 are set to be in the operable state in a case of switching the image forming apparatus 1 to the normal mode based on the detection result by the human sensor 70, in a case where erroneous detection by the human sensor 70 occurs, the power consumption of the image forming apparatus 1 is likely to increase. Further, in a case where time has elapsed after the information processing unit 81 receives the print job, there is a high possibility that the user does not perform the output process based on the print job, and there is a tendency that erroneous detection by the human sensor 70 is likely to occur.

On the other hand, since the information processing unit 81 sets only the operation display unit 30 to be in the operable state in a case where the image forming apparatus 1 is switched to the normal mode after the first return time has elapsed since the detection region 300 is set to the extended range 300B, the power consumption of the image forming apparatus 1 can be prevented from being excessively increased even in a case where the erroneous detection by the human sensor 70 occurs.

The first return time may be varied according to the type of the print job received by the information processing unit 81, the state of the print job, or the like.

Fig. 6 is a view showing a relationship between a type of a print job or a state of the print job received by the information processing unit 81 and a first return time and an extended time.

In the example shown in Fig. 6, as the type of the print job received by the information processing unit 81, the print job in which the image data is stored in the box and then the output process is performed, and the print job of forming the image on the paper based on the image data received via FAX (FAX reception) are individually set with the first return time and the extended time.

In addition, for the print job in which the image data is stored in the box and then the output process is performed, the first return time and the extended time are set for each of the boxes (first box, second box, and third box) in which the image data is stored.

As shown in Fig. 6, in a case where the received print job is a print job of forming an image on paper based on the image data received via FAX, the information processing unit 81 shortens the first return time as compared with a case of a print job in which the image data is stored in the box and then the output process is performed.

As described above, in the print job of forming an image on a paper based on the image data received via FAX, a time until the user moves to the front of the image forming apparatus 1 and starts the output process based on the print job after the user receives the print job via FAX by the image forming apparatus 1 is likely to be a long time. In this case, even though the possibility that the user performs the output process based on the print job is low, in a case where the first return time is made long, the power consumption of the image forming apparatus 1 is likely to increase in a case where the erroneous detection by the human sensor 70 occurs.

In a case where the received print job is a print job of forming an image on paper based on the image data received by FAX, the information processing unit 81 shortens the first return time as compared with a case of a print job in which the image data is stored in the box and then the output process is performed, so that the power consumption of the image forming apparatus 1 is prevented from being excessively increased, even in a case where erroneous detection by the human sensor 70 occurs.

### [Exemplary Embodiment 2]

In Exemplary Embodiment 1, an aspect is described in which the information processing unit 81 extends the range of the detection region 300 as a whole in a case where the image forming apparatus 1 receives the print job.

On the other hand, Exemplary Embodiment 2 is different from Exemplary Embodiment 1 in that the detection region 300 by the human sensor 70 is divided into a plurality of blocks and the information processing unit 81 extends the detection region 300 for each block in a case where the image forming apparatus 1 receives the print job.

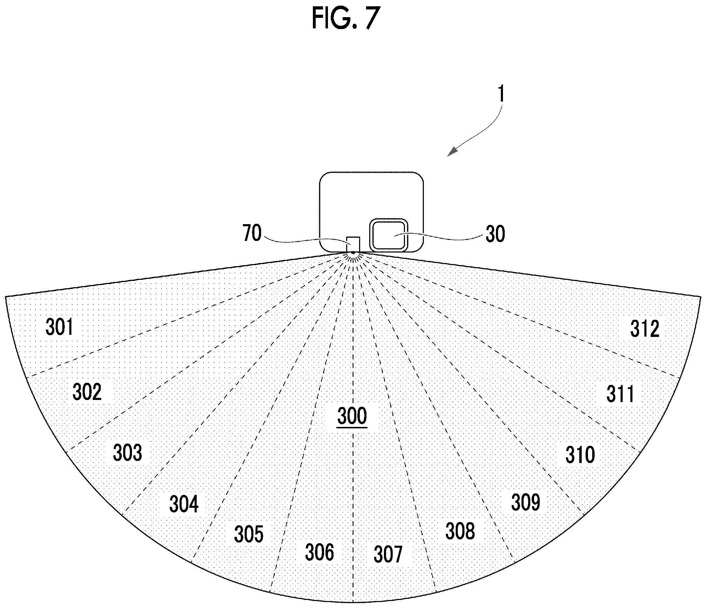

Fig. 7 is a view showing a detection region 300 by the human sensor 70 according to the present exemplary embodiment.

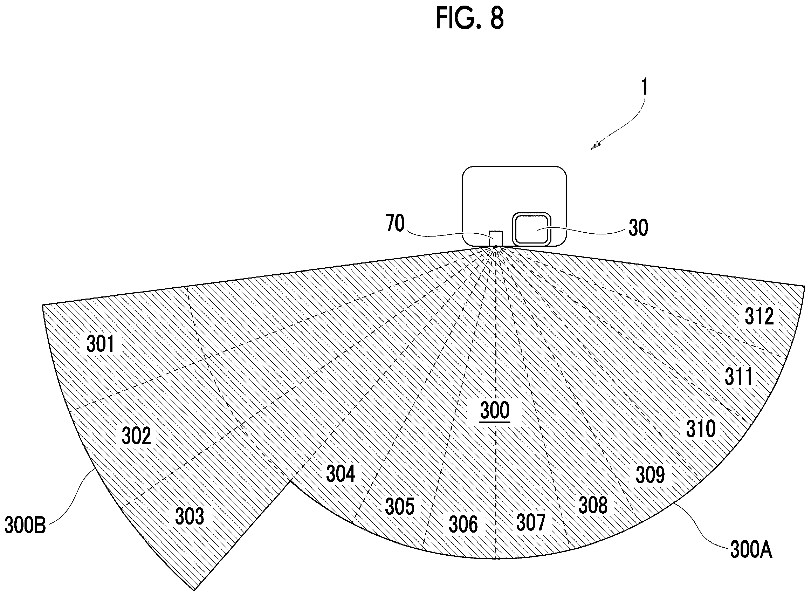

Fig. 8 is a view showing a range of the detection region 300 in a case where the print job is received.

Figs. 7 and 8 correspond to views of the image forming apparatus 1 as seen from above.

As shown in Fig. 7, in Exemplary Embodiment 2, the detection region 300 by the human sensor 70 is divided into a plurality of blocks (in this example, 12 blocks) which are an example of the detection sections (first block 301, second block 302, ..., and twelfth block 312). Specifically, the detection region 300 has a fan-shaped shape that spreads out on the front side of the image forming apparatus 1 with the human sensor 70 as the center, as in Exemplary Embodiment 1. Then, the detection region 300 is divided into a first block 301, a second block 302, ..., and a twelfth block 312 from the left to the right in Fig. 7 so as to divide the central angle into 12 equal parts. It should be noted that, in the following description, in a case where the first block 301, the second block 302, ..., and the twelfth block 312 are not distinguished from each other, these may be collectively referred to as blocks 301 to 312. Each of the blocks 301 to 312 has a fan-shaped shape with the human sensor 70 as the center.

The human sensor 70 according to the present exemplary embodiment detects the presence of the user or the like for each of the blocks 301 to 312 of the detection region 300. It should be noted that the human sensor 70 can detect which of the blocks 301 to 312 of the detection region 300 the user or the like has entered. Then, the human sensor 70 outputs a result of detecting the presence of the user or the like in the blocks 301 to 312 of the detection region 300 to the information processing unit 81 (see Fig. 2).

In a case where the presence of the user or the like is detected in the blocks 301 to 312 of the detection region 300 by the human sensor 70, the information processing unit 81 performs a process of switching the power mode of the image forming apparatus 1 from the low power mode to the normal mode.

In a case where the image forming apparatus 1 does not receive the print job, the information processing unit 81 according to the present exemplary embodiment sets each of the blocks 301 to 312 of the detection region 300 by the human sensor 70 in a predetermined normal range 300A, as in Exemplary Embodiment 1.

Further, in a case where the image forming apparatus 1 receives the print job, the information processing unit 81 sets the ranges of the first block 301, the second block 302, and the third block 303, which are selected from among the blocks 301 to 312 of the detection region 300, to an extended range 300B that is wider than the normal range 300A, as shown in Fig. 8. It should be noted that the information processing unit 81 extends the ranges of the first block 301, the second block 302, and the third block 303 of the detection region 300, as compared with a case where the image forming apparatus 1 does not receive the print job.

On the other hand, even in a case where the image forming apparatus 1 receives the print job, the information processing unit 81 does not extend the ranges of the fourth block 304 to the twelfth block 312 of the detection region 300.

In addition, in the following description, among the blocks 301 to 312 of the detection region 300, a block of which the range is extended in a case where the image forming apparatus 1 receives the print job may be referred to as a specific block, and a block of which the range is not extended may be referred to as another block.

In the present exemplary embodiment, in a case where the image forming apparatus 1 receives the print job, the ranges of the first block 301 to the third block 303 are extended, so that the human sensor 70 can detect the user who has entered the first block 301 to the third block 303 at a position further away from the image forming apparatus 1. Thus, in a case where the user who tries to perform the output process based on the print job approaches the image forming apparatus 1 from the first block 301 to the third block 303 side, switching the power mode of the image forming apparatus 1 from the low power mode to the normal mode becomes easier to complete while the user reaches the front of the image forming apparatus 1. As a result, the time for the user to wait until the operation input to the operation display unit 30 is enabled after the user reaches the front of the image forming apparatus 1 is further shortened.

Further, in the present exemplary embodiment, in a case where the image forming apparatus 1 receives the print job, the ranges of the fourth block 304 to the twelfth block 312 are not extended, so that a person other than the user who tries to perform the output process based on the print job is less likely to enter the fourth block 304 to the twelfth block 312. Thus, in a case where the output process based on the print job is not performed after the print job is received, the erroneous detection by the human sensor 70 is less likely to occur.

It is preferable that the information processing unit 81 sets, for example, among the plurality of blocks 301 to 312 in the detection region 300, a block where the user who tries to perform the output process of the print job is likely to enter, as a specific block for extending the range in a case where the image forming apparatus 1 receives the print job.

The information processing unit 81 can set, for example, a specific block for extending the range in a case where the print job is received, among the plurality of blocks 301 to 312 of the detection region 300, based on the operation input to the display screen displayed on the operation display unit 30.

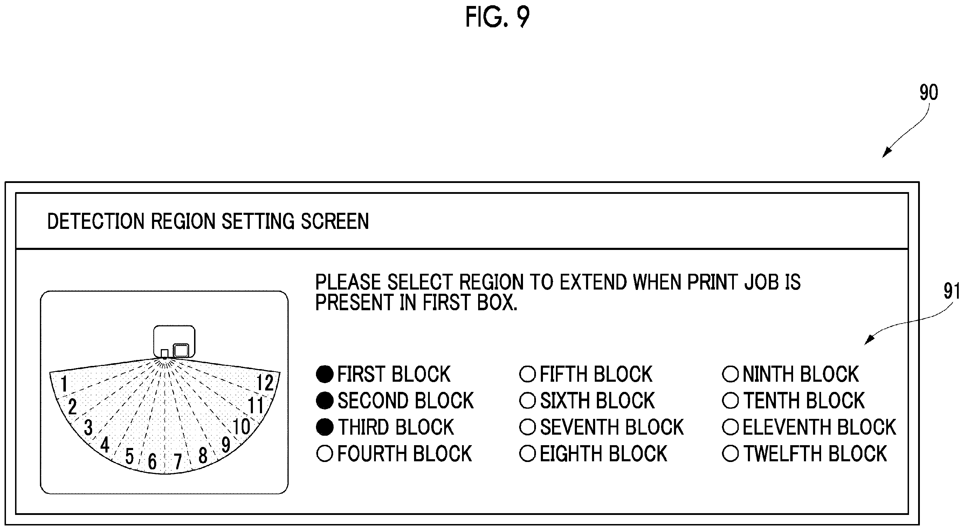

Fig. 9 is a view showing an example of a setting screen 90, which is a display screen for setting a specific block by an operation input from the user, displayed on the operation display unit 30.

The information processing unit 81 can set a specific block for each type of the print job, for example, based on the operation input to the setting screen 90. In this example, the information processing unit 81 sets the specific block for each box (first box, second box, and third box) in which the image data is stored, for the print job in which the image data is stored in the box and then the output process is performed. Fig. 9 shows a setting screen 90 for setting a specific block for extending the range, in a case where the print job received by the information processing unit 81 is a print job in which the image data is stored in the first box and then the output process is performed.

As shown in Fig. 9, the setting screen 90 includes a selection field 91 for selecting a specific block for extending the range, among the plurality of blocks 301 to 312 of the detection region 300.

In the example shown in Fig. 9, the first block 301, the second block 302, and the third block 303 are selected from among the plurality of blocks 301 to 312 of the detection region 300, in the selection field 91 of the setting screen 90.

The information processing unit 81 sets the first block 301, the second block 302, and the third block 303 as specific blocks of which the ranges are to be extended in a case where the image forming apparatus 1 receives the print job, based on the selection on the selection field 91 of the setting screen 90.

Here, as described above, in the print job in which the image data is stored in the box and then the output process is performed, the boxes (first box, second box, and third box) in which the image data is stored are created for each user who uses the image forming apparatus 1. In other words, in the print job in which the image data is stored in the box and then the output process is performed, the user who tries to perform the output process based on the print job is determined for each box. In general, in a space such as an office in which the image forming apparatus 1 is installed, a position of a desk or the like at which each user performs work is likely to be fixed. Thus, in a print job in which the image data is stored in the box and then the output process is performed, for each box, a direction in which the user who tries to perform the output process based on the print job moves toward the image forming apparatus 1 is likely to be limited to a specific direction.

In the present exemplary embodiment, the information processing unit 81 determines a specific block for extending the range for each box in a case where the print job is received, so that the block where the user who tries to perform the output process of the print job is likely to enter is easily set as the specific block.

In addition, in a case where the user who tries to perform the output process of the print job moves toward the image forming apparatus 1 from a specific direction regardless of the type of the print job, the state of the print job, or the like, the information processing unit 81 may collectively set the specific block for extending the range in a case where the print job is received, regardless of the type of the print job, the state of the print job, or the like. In this case, the burden on the user required to set the specific block can be reduced, as compared with a case of individually setting the specific block according to the type of the print job or the state of the print job.

Further, for example, in a case where the print job is received in the past, the information processing unit 81 may set a specific block for extending the range in a case where the print job is received, based on a history in which the human sensor 70 detects the entry of the user into the blocks 301 to 312 of the detection region 300.

For example, in a case where the print job is received and the entry of the user or the like into the blocks 301 to 312 of the detection region 300 is detected by the human sensor 70, the information processing unit 81 stores the block in which the entry is detected and the information related to whether or not the output process based on the print job is performed in the image forming apparatus 1 after the entry is detected, in association with each other in the storage unit 82 as the history.

Then, the information processing unit 81 sets, as the specific block for extending the range, the block with a large number of times the output process based on the print job is performed in the image forming apparatus 1 after the human sensor 70 detects the entry of the user or the like, among the blocks 301 to 312 of the detection region 300, based on the history stored in the storage unit 82.

Thus, the information processing unit 81 can set, among the plurality of blocks 301 to 312 in the detection region 300, a block where the user who tries to perform the output process of the print job is likely to enter, as a specific block for extending the range in a case where the image forming apparatus 1 receives the print job.

Further, the information processing unit 81 sets, as the other block of which the range is not extended, the block with a large number of times the output process based on the print job is not performed in the image forming apparatus 1 after the human sensor 70 detects the entry of the user or the like, among the blocks 301 to 312 of the detection region 300, based on the history stored in the storage unit 82. In other words, the information processing unit 81 sets, as the other block, the block in which the erroneous detection by the human sensor 70 has occurred after the print job is received, among the blocks 301 to 312 of the detection region 300.

Thus, in a case where the image forming apparatus 1 receives the print job, in a case where there is a low possibility that the user performs the output process based on the print job, a person other than the user is prevented from entering the detection region 300, and the erroneous detection by the human sensor 70 is less likely to occur.

In addition, in the above-described exemplary embodiment, the information processing unit 81 sets the ranges of the first block 301 to the third block 303, which are the specific blocks, to the extended ranges 300B in a case where the print job is received, so that the ranges of the first block 301 to the third block 303 are extended more than the ranges of the fourth block 304 to the twelfth block 312, which are the other blocks. However, the aspect in which the information processing unit 81 extends the range of the specific block in a case of receiving the print job is not limited to this.

In a case where the print job is received, the information processing unit 81 may set a range of all the blocks 301 to 312 of the detection region 300 by the human sensor 70 in the extended range 300B, and then may reduce other blocks (for example, the fourth block 304 to the twelfth block 312) having a lower possibility of the user performing the output process based on the print job to a range lower than the extended range 300B (for example, the normal range 300A).

For example, in a case where the print job is received, the information processing unit 81 sets the range of all the blocks 301 to 312 of the detection region 300 by the human sensor 70 to the extended range 300B. After that, it is assumed that the output process based on the print job is not performed even though the entry of the object into one block (for example, the fourth block 304) among the blocks 301 to 312 is detected by the human sensor 70. In this case, in a case where the next print job is received, the information processing unit 81 sets the first block 301 to the third block 303, and the fifth block 305 to the twelfth block 312 of the detection region 300 excluding the fourth block 304 as the extended range 300B, and sets the fourth block 304 as a range narrower than the extended range 300B.

Then, the information processing unit 81 repeatedly performs the above-described process. Thus, the range of the block for which the output process based on the print job is not performed even though the entry of the object by the human sensor 70 is detected becomes gradually narrower range as compared with other blocks.

As a result, in a case where the image forming apparatus 1 receives the print job, in a case where there is a low possibility that the user performs the output process based on the print job, a person other than the user is prevented from entering the detection region 300, and the erroneous detection by the human sensor 70 is less likely to occur.

### [Exemplary Embodiment 3]

In Exemplary Embodiment 1, an aspect is described in which the information processing unit 81 switches the power mode of the image forming apparatus 1 between the normal mode and a low power mode in which power consumption is lower than in the normal mode, according to the detection result or the like by the human sensor 70.

On the other hand, Exemplary Embodiment 3 is different from Exemplary Embodiment 1 in that the information processing unit 81 switches the power mode of the image forming apparatus 1 between the normal mode and a first low power mode and a second low power mode in which power consumption is lower than in the normal mode.

Here, the normal mode means a state where power is supplied to each unit configuring the image forming apparatus 1 by the power supply device 60, and each unit configuring the image forming apparatus 1 can perform a predetermined operation, as in Exemplary Embodiment 1.

The first low power mode means a state where the power consumption is lower than in the normal mode, by partially stopping the supply of power to each unit configuring the image forming apparatus 1 or reducing the amount of power supplied to each unit as compared with the normal mode. The first low power mode is an example of a first low power state.

The second low power mode means a state where the power consumption is smaller than in the normal mode and the power consumption is larger than in the first low power mode, by reducing the amount of power supplied to each unit configuring the image forming apparatus 1 compared with the normal mode. The second low power mode is an example of a second low power state.

In the second low power mode, the display screen cannot be displayed by the operation display unit 30, the operation of forming the image by the image forming unit 10, the operation of reading the document by the image reading unit 20, and the like cannot be executed, as in the first low power mode. On the other hand, in the second low power mode, a larger power is supplied to the operation display unit 30, the image forming unit 10, the image reading unit 20, and the like than in the first low power mode. Thus, in the image forming apparatus 1, the second switching time required for switching the power mode from the second low power mode to the normal mode is shorter than the first switching time required for switching from the first low power mode to the normal mode.

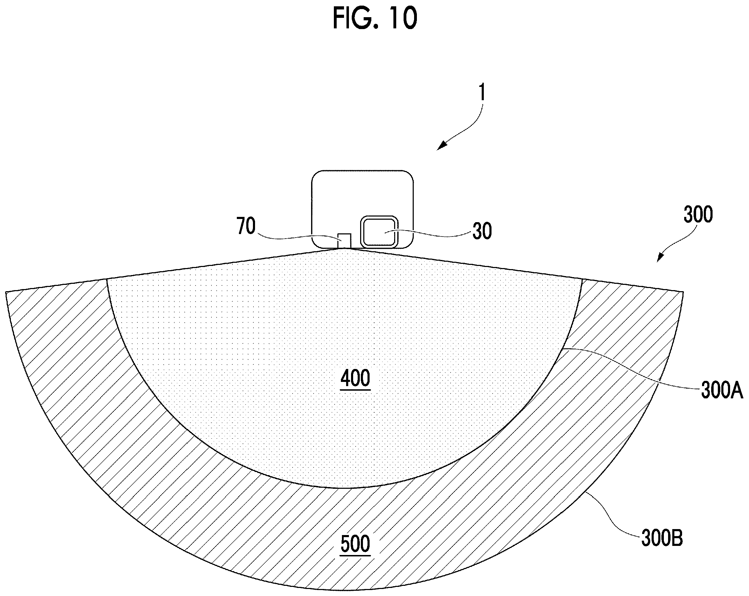

Fig. 10 is a view showing a detection region 300 by the human sensor 70 according to the present exemplary embodiment. Fig. 10 corresponds to a view of the image forming apparatus 1 as seen from above. Fig. 10 shows the detection region 300 set by the information processing unit 81 (see Fig. 2) in a case where the image forming apparatus 1 receives the print job.

As shown in Fig. 10, the detection region 300 by the human sensor 70 as a whole according to the present exemplary embodiment has a fan-shaped shape that spreads out on the front side of the image forming apparatus 1 with the human sensor 70 as the center. The detection region 300 includes an inner peripheral region 400 located on an inner peripheral side of the detection region 300 and an outer peripheral region 500 that spreads out on an outer periphery of the inner peripheral region 400. In this example, the range of the inner peripheral region 400 is equal to the normal range 300A of the detection region 300 described in Exemplary Embodiment 1. Further, the range of the outer peripheral region 500 is equal to a range excluding the normal range 300A from the extended range 300B of the detection region 300 described in Exemplary Embodiment 1.

In a case where the operation of each unit configuring the image forming apparatus 1, such as the image forming unit 10, the image reading unit 20, the operation display unit 30, and the like is not performed within a predetermined period, the information processing unit 81 of the present exemplary embodiment sets the power mode of the image forming apparatus 1 to the low power mode.

Further, in a case where the image forming apparatus 1 does not receive the print job, the information processing unit 81 sets the range of the detection region 300 by the human sensor 70 to the normal range 300A, as in Exemplary Embodiment 1.

Then, in a case where the print job is not received and the human sensor 70 detects the entry of the user into the detection region 300, the information processing unit 81 switches the power mode of the image forming apparatus 1 from the first low power mode to the normal mode. Thus, the image forming apparatus 1 is in a state where the power is supplied to at least the operation display unit 30 and the operation with respect to the operation display unit 30 can be performed.

Further, in a case where the print job is received, the information processing unit 81 sets the detection region 300 to the extended range 300B including the inner peripheral region 400 and the outer peripheral region 500, as shown in Fig. 10. It should be noted that the information processing unit 81 extends the range of the detection region 300 as compared with a case where the image forming apparatus 1 does not receive the print job.

As in Exemplary Embodiment 1, in a case where the predetermined extended time has elapsed after the print job is received and then the range of the detection region 300 is extended, the information processing unit 81 restores the range of the detection region 300 to the normal range 300A.

Here, in the present exemplary embodiment, the information processing unit 81 switches the image forming apparatus 1 to the different power modes in a case where the entry of the user into the inner peripheral region 400 of the detection region 300 is detected by the human sensor 70 and in a case where the entry of the user into the outer peripheral region 500 of the detection region 300 is detected by the human sensor 70.

Specifically, in a case where the human sensor 70 detects the entry of the user or the like into the outer peripheral region 500, the information processing unit 81 switches the power mode of the image forming apparatus 1 from the first low power mode to the second low power mode.

Further, in a case where the user or the like that has entered the outer peripheral region 500 moves further toward the image forming apparatus 1 to enter the inner peripheral region 400, and the human sensor 70 detects the entry of the user or the like into the inner peripheral region 400, the information processing unit 81 switches the power mode of the image forming apparatus 1 from the second power mode to the normal mode.

As described above, in a case where the print job is received, the information processing unit 81 according to the present exemplary embodiment sets the range of the detection region 300 to the extended range 300B including the inner peripheral region 400 and the outer peripheral region 500, so that the information processing unit 81 easily switches each unit of the image forming apparatus 1 into an operable state, until a user who wants to perform the output process based on the print job reaches in front of the image forming apparatus 1, as compared to the case where the range of the detection region 300 is not expanded. Thus, it is possible to prevent an increase in time for the user to wait after reaching the front of the image forming apparatus 1.

Further, in the extended range 300B including the inner peripheral region 400 and the outer peripheral region 500, a person other than the user who tries to perform the output process based on the print job is likely to enter the outer peripheral region 500.

In a case where the entry of a person or the like into the outer peripheral region 500 is detected by the human sensor 70, the information processing unit 81 of the present exemplary embodiment switches the power mode of the image forming apparatus 1 from the first low power mode to the second low power mode, so that the power consumption of the image forming apparatus 1 in a case where the entry of a person into the outer peripheral region 500 is erroneously detected can be prevented from being increased as compared with a case where the power mode is switched from the first low power mode to the normal mode, for example.

### (Modification Example 1 of Exemplary Embodiment 3)

Here, in the above-described exemplary embodiment, a case is described in which the power mode of the image forming apparatus 1 is switched from the first low power mode to the second low power mode in a case where the human sensor 70 detects the entry of the user into the outer peripheral region 500 of the extended detection region 300.

On the other hand, until a predetermined return time has elapsed after the image forming apparatus 1 receives the print job and extends the detection region 300, in a case where the human sensor 70 detects the entry of the user into the outer peripheral region 500, the information processing unit 81 may switch the power mode of the image forming apparatus 1 to the normal mode in which each unit configuring the image forming apparatus 1 can operate.

To explain specifically, until a predetermined time (hereinafter, referred to as a second return time) has elapsed after the detection region 300 is extended, in a case where the human sensor 70 detects the entry of the user into the outer peripheral region 500, the information processing unit 81 switches the power mode of the image forming apparatus 1 to the normal mode and sets the operation display unit 30 and the image forming unit 10 to be in the operable state.

Thus, a time for the user to wait until the output process based on the print job is started by the image forming unit 10 after the user reaches the front of the image forming apparatus 1 is shortened.

Further, until a predetermined time (hereinafter, referred to as a third return time) has elapsed after the detection region 300 is extended and the second return time has elapsed, in a case where the human sensor 70 detects the entry of the user into the outer peripheral region 500, the information processing unit 81 switches the power mode of the image forming apparatus 1 to the normal mode and sets only the operation display unit 30 to be in the operable state.

As described above, in a case where a long time has elapsed after the image forming apparatus 1 receives the print job and extends the detection region 300, there is a high possibility that the user does not perform the output process based on the print job, and there is a tendency that erroneous detection by the human sensor 70 is likely to occur.

On the other hand, since only the operation display unit 30 is set to be in the operable state in a case where the human sensor 70 detects the entry of the user into the outer peripheral region 500 until the third return time has elapsed after the second return time has elapsed, even in a case where the erroneous detection by the human sensor 70 occurs, the power consumption of the image forming apparatus 1 can be prevented from being excessively increased.

Further, after the detection region 300 is extended and the second return time and the third return time elapse, in the same manner as in the above-described exemplary embodiment, in a case where the human sensor 70 detects the entry of the user into the outer peripheral region 500, the information processing unit 81 switches the power mode of the image forming apparatus 1 from the first low power mode to the second low power mode.

Here, the second return time and the third return time may be varied according to the type of the print job received by the information processing unit 81, the state of the print job, and the like.

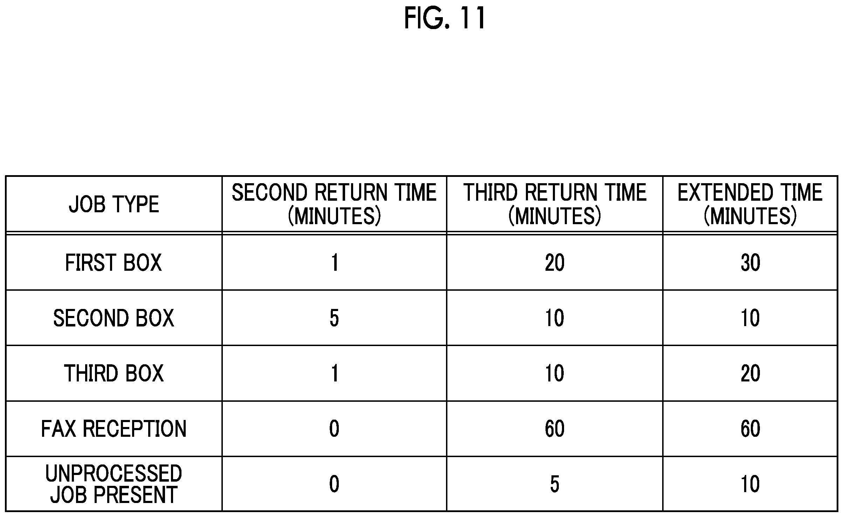

Fig. 11 is a view showing a relationship between a type of a print job or a state of the print job received by the information processing unit 81 and a second return time, a third return time, and an extended time.

In the example shown in Fig. 11, as the type of the print job received by the information processing unit 81, the print job in which the image data is stored in the box and then the output process is performed, and the print job of forming the image on the paper based on the image data received via FAX (FAX reception) are individually set with the second return time, the third return time, and the extended time.

Further, for the print job in which the image data is stored in the box and then the output process is performed, the second return time, the third return time, and the extended time are set for each box (first box, second box, and third box) in which the image data is stored.

Further, for the print job in which the image data is stored in the box and then the output process is performed, a second return time, a third return time, and an extended time are set for a case where another print job remains in the box before the output process is performed.

As shown in Fig. 11, in a case where the received print job is a print job of forming an image on paper based on the image data received via FAX, the information processing unit 81 shortens the second return time as compared with a case of a print job in which the image data is stored in the box and then the output process is performed. In this example, in a case where the received print job is a print job of forming an image on paper based on the image data received via FAX, the second return time is set to 0 minutes.

As described above, a time until the user moves to the front of the image forming apparatus 1 and starts the output process based on the print job, after the image forming apparatus 1 receives the print job via FAX, is likely to be a long time. In a case where the received print job is a print job of forming an image on paper based on the image data received via FAX, the information processing unit 81 shortens the second return time as compared with a case of a print job in which the image data is stored in the box and then the output process is performed, so that the power consumption of the image forming apparatus 1 is prevented from being excessively increased, even in a case where erroneous detection by the human sensor 70 occurs.

Here, in a case where the second return time is 0 minutes, in a case where the image forming apparatus 1 receives the print job, the information processing unit 81 sets only the operation display unit 30 to be in the operable state in a case where the human sensor 70 detects the entry of the user into the outer peripheral region 500.

In this case, in a case where the user enters the outer peripheral region 500 by passing through the vicinity of the image forming apparatus 1, the operation display unit 30 is activated, so that the user can easily understand that the image forming apparatus 1 has received the image data via FAX.

Further, as shown in Fig. 11, in a case where another print job before the output process is performed remains in the box, the information processing unit 81 shortens the second return time and the third return time as compared with a case where another print job before the output process is performed is not present. In this example, the information processing unit 81 sets the second return time to 0 minutes in a case where another print job before the output process is performed remains in the box.

In a case where another print job received in the past by the information processing unit 81 remains in the same box without the output process being performed, the user is unlikely to start the output process based on the newly received print job. On the other hand, in a case where another print job before the output process is performed remains in the box, the information processing unit 81 shortens the second return time and the third return time as compared with a case where another print job before the output process is performed is not present, so that an excessive increase in the power consumption of the image forming apparatus 1 can be prevented even in a case where erroneous detection by the human sensor 70 occurs.

### (Modification Example 2 of Exemplary Embodiment 3)

Further, even in Exemplary Embodiment 3, the detection region 300 by the human sensor 70 may be divided into a plurality of blocks as in Exemplary Embodiment 2.

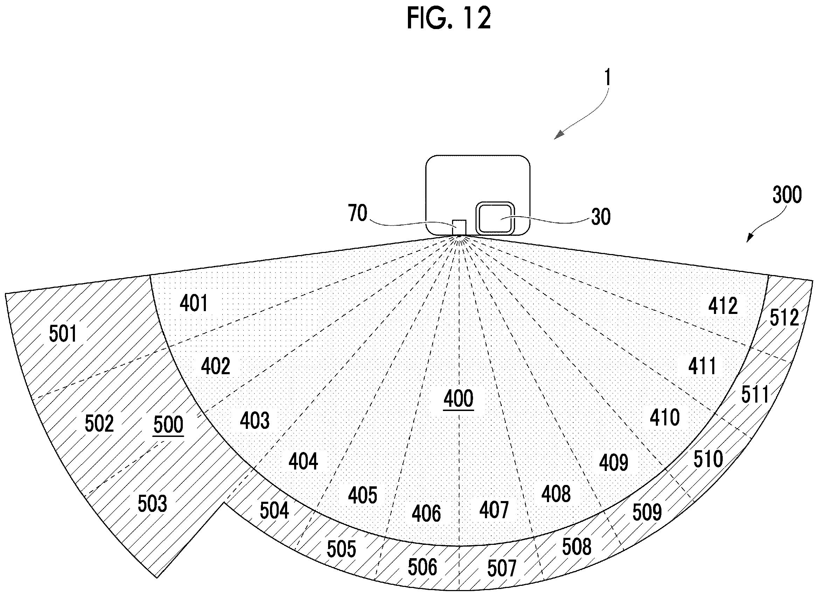

Fig. 12 is a view showing a range of the detection region 300 in a case where the print job is received. Fig. 12 corresponds to a view of the image forming apparatus 1 as seen from above.

The inner peripheral region 400 of the detection region 300 shown in Fig. 12 is divided into a plurality of blocks (in this example, 12 blocks) which are an example of the detection sections (first block 401, second block 402, ..., and twelfth block 412).

Similarly, the outer peripheral region 500 of the detection region 300 is divided into a plurality of blocks (in this example, 12 blocks) which are an example of the detection sections (first block 501, second block 502, ..., twelfth block 512).

Then, the human sensor 70 according to the present exemplary embodiment detects the presence of the user or the like for each of the blocks 401 to 412 of the inner peripheral region 400 and the blocks 501 to 512 of the outer peripheral region 500 in the detection region 300.

In a case where the human sensor 70 detects the presence of the user or the like in the blocks 501 to 512 of the outer peripheral region 500 in the detection region 300, the information processing unit 81 performs a process of switching the power mode of the image forming apparatus 1 to the second low power mode.

Further, in a case where the human sensor 70 detects the presence of the user or the like in the blocks 401 to 412 of the inner peripheral region 400 in the detection region 300, the information processing unit 81 performs a process of switching the power mode of the image forming apparatus 1 to the normal mode.

In this example, in a case where the image forming apparatus 1 receives the print job, the information processing unit 81 sets the detection region 300 in a range including the inner peripheral region 400 and the outer peripheral region 500.

Further, in this example, as shown in Fig. 12, in a case where the detection region 300 is extended, the range of the first block 501 to the third block 503 in the outer peripheral region 500 is wider than the range of the fourth block 504 to the twelfth block 512.

Thus, in this example, in a case where the image forming apparatus 1 receives the print job, the human sensor 70 can detect the user who has entered the first block 501 to the third block 503 in the outer peripheral region 500 at a position further away from the image forming apparatus 1.

Further, in this example, in a case where the image forming apparatus 1 receives the print job and extends the detection region 300, the information processing unit 81 narrows the range of the fourth block 504 to the twelfth block 512 of the outer peripheral region 500 as compared with the range of the first block 501 to the third block 503. Thus, a person other than the user who tries to perform the output process based on the print job is less likely to enter the fourth block 504 to the twelfth block 512 of the outer peripheral region 500. Thus, in a case where the output process based on the print job is not performed after the print job is received, the erroneous detection by the human sensor 70 is less likely to occur.

In addition, the specific block of which the range is wider than the ranges of other blocks in the outer peripheral region 500 can be determined based on the operation input to the operation display unit 30 or the history in which the human sensor 70 detects the user or the like in a case where the print job has been received in the past, as in Exemplary Embodiment 2.

Although the exemplary embodiments of the present invention have been described above, a technical scope of the present invention is not limited to the scope described in the above-described exemplary embodiments. It is apparent from claims that exemplary embodiments in which various modifications or improvements are added to the above-mentioned exemplary embodiments are also included in the technical scope of the present invention.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### <Supplementary Note>

(((1))) An image forming apparatus comprising:
   an operation unit that performs an operation related to formation of an image by receiving supply of power;
   a detection unit that detects an entry of an object into a detection region which is a predetermined range, from the operation unit; and
   a processor configured to:
      extend a range of the detection region by the detection unit in a case where a job for executing the operation by the operation unit is received, as compared with a case where the job is not received; and
      change a state of the operation unit according to a detection result by the detection unit.
(((2))) The image forming apparatus according to (((1))), wherein the processor is configured to:
   restore the detection region to an original range, in a case where a predetermined extended time has elapsed, after the job is received and then the range of the detection region is extended.
(((3))) The image forming apparatus according to (((2))), wherein the processor is configured to:
   vary the extended time according to at least one of a type of the job or a state of the job.
(((4))) The image forming apparatus according to (((3))), wherein the processor is configured to:
   set the extended time in a case where a new job is received in a state where a previous job to be executed by the operation unit is present to be shorter than the extended time in a case where the new job is received in a state where the previous job to be executed by the operation unit is not present.
(((5))) The image forming apparatus according to any one of (((1))) to (((4))),
   wherein the operation unit includes an image forming unit that forms an image on a recording medium as the operation, and
   the processor is configured to:
      set the operation unit in a state where the image forming unit is operable, in a case where the detection unit detects the entry of the object into the detection region, after the job is received and then the range of the detection region is extended.
(((6))) The image forming apparatus according to (((5))),
   wherein the operation unit further includes a display unit that performs display of information related to formation of an image as the operation, and
   the processor is configured to:
      set the operation unit to be in a state where the display unit and the image forming unit are operable, in a case where the entry of the object into the detection region is detected until a predetermined period has elapsed after the job is received and then the range of the detection region is extended; and
      set the operation unit to be in a state where the display unit is operable, in a case where the entry of the object into the detection region is detected after the period has elapsed.
(((7))) The image forming apparatus according to any one of (((1))) to (((6))),
   wherein the detection unit detects the entry of the object for each of a plurality of detection sections into which the detection region is divided, and
   the processor is configured to:
      extend the range of the detection region by the detection unit for each of the detection sections, in a case where the job is received.
(((8))) The image forming apparatus according to (((7))),
   wherein the detection sections for extending the range of the detection region are set in advance for each type of the job, and
   the processor is configured to:
      extend a range of the detection section that is set in advance, according to a type of the received job.
(((9))) The image forming apparatus according to (((8))),
   wherein the detection sections for extending the range of the detection region are set based on a history in which the detection unit has detected the entry of the object in a case where the job is received in the past.
(((10))) The image forming apparatus according to (((9))), wherein the processor is configured to:
   in a case where in a job of storing data used for forming an image in a predetermined storage region, an operation of forming the image based on the data is performed by the operation unit, after the data is stored in the storage region,
   set the detection section in which the detection unit detects presence of the obj ect before the operation, as the detection section for extending the range of the detection region.
(((11))) The image formation apparatus according to (((7))), wherein the processor is configured to:
   set a range of the detection section to be narrow, in a case where the operation by the operation unit is not performed until a predetermined period has elapsed after the detection unit detects presence of the object in the extended detection section.
(((12))) The image forming apparatus according to any one of (((1))) to (((11))), wherein the processor is configured to:
   control the operation unit to be in a normal state where the operation is possible or a low power state where power consumption is lower than in the normal state; and
   change the operation unit from the low power state to the normal state, in a case where the entry of the object into the detection region is detected in a state where the operation unit is controlled to be in the low power state.
(((13))) The image forming apparatus according to (((12))), wherein the processor is configured to:
   control the operation unit to a first low power state and a second low power state where power consumption is larger than in the first low power state as the low power state;
   change the operation unit from the first low power state to the second low power state, in a case where the entry of the object into the extended detection region is detected in a state where the operation unit is controlled to be in the first low power state; and
   change the operation unit from the second low power state to the normal state, in a case where the entry of the object into the detection region before the extension is detected in a state where the operation unit is controlled to be in the second low power state.

With the image forming apparatus according to (((1))), it is possible to make the erroneous detection by the detection unit less likely to occur in a case where the job is not received, as compared with a case where the range of the detection region by the detection unit is made equal in a case where the job is received and in a case where the job is not received.

With the image forming apparatus according to (((2))), it is possible to make the erroneous detection by the detection unit less likely to occur, as compared with a case where the range of the detection region is continuously extended even after the extended time has elapsed.

With the image forming apparatus according to (((3))), it is possible to make the erroneous detection by the detection unit less likely to occur, as compared with a case where the extended time is uniformly set regardless of the type of the job and the state of the job.

According to the image forming apparatus according to (((4))), it is possible to make the erroneous detection by the detection unit less likely to occur, as compared with a case where the extension period in a case where the new job is received in a state where a previous job to be executed is present is not shortened.

According to the image forming apparatus according to (((5))), a time for the user to wait until the operation by the image forming unit is started after the user reaches the image forming apparatus can be shortened as compared with a case where the operation unit is not set to the operable state in a case where the detection unit detects the entry of the object.

With the image forming apparatus according to (((6))), it is possible to reduce the power consumption in the image forming apparatus as compared with a case where the operation unit is set to be in a state where the display unit and the image forming unit are operable in a case where the entry of the object into the detection region is detected, even after the predetermined period has elapsed.

With the image forming apparatus according to (((7))), it is possible to make the erroneous detection by the detection unit less likely to occur, as compared with a case where the range of the detection region is not extended for each detection section.

With the image forming apparatus according to (((8))), it is possible to make the erroneous detection by the detection unit less likely to occur, as compared with a case where the entire detection region is extended regardless of the type of the job.

With the image forming apparatus according to (((9))), the detection section where the user is likely to enter is easily extended, as compared to a case where the detection section is set to be extended without being based on the history in which the detection unit has detected the entry of the object.

With the image forming apparatus according to (((10))), the detection section where the user is likely to enter is easily extended, as compared to a case where the detection section in which the detection unit detects the presence of the object before the operation of forming an image is not set as the detection section for extending a range of the detection region.

With the image forming apparatus according to (((11))), it is possible to make the erroneous detection by the detection unit less likely to occur, as compared with a case where the range of the detection section is not narrowed in a case where the operation by the operation unit is not performed.

With the image forming apparatus according to (((12))), a time for the user to wait until the operation by the operation unit is started after the user reaches the image forming apparatus can be shortened as compared with a case where the operation unit is not changed from the low power state to the normal state in a case where the detection unit detects the entry of the object.

With the image forming apparatus according to (((13))), in a case where the entry of the object into the extended detection region is detected, it is possible to reduce the power consumption in the image forming apparatus as compared with a case where the operation unit is changed from the first low power state to the normal state.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: image forming apparatus
10: image forming unit
20: image reading unit
30: operation display unit
60: power supply device
70: human sensor
80: control device
81: information processing unit
90: setting screen
300: detection region
300A: normal range
300B: extended range
400: inner peripheral region
500: outer peripheral region

## Claims

1. An image forming apparatus comprising:
an operation unit that performs an operation related to formation of an image by receiving supply of power;
a detection unit that detects an entry of an object into a detection region which is a predetermined range, from the operation unit; and
a processor configured to:
extend a range of the detection region by the detection unit in a case where a job for executing the operation by the operation unit is received, as compared with a case where the job is not received; and
change a state of the operation unit according to a detection result by the detection unit.

2. The image forming apparatus according to claim 1, wherein the processor is configured to:
restore the detection region to an original range, in a case where a predetermined extended time has elapsed, after the job is received and then the range of the detection region is extended.

3. The image forming apparatus according to claim 2, wherein the processor is configured to:
vary the extended time according to at least one of a type of the job or a state of the job.

4. The image forming apparatus according to claim 3, wherein the processor is configured to:
set the extended time in a case where a new job is received in a state where a previous job to be executed by the operation unit is present to be shorter than the extended time in a case where the new job is received in a state where the previous job to be executed by the operation unit is not present.

5. The image forming apparatus according to any one of claims 1 to 4,
wherein the operation unit includes an image forming unit that forms an image on a recording medium as the operation, and
the processor is configured to:
set the operation unit in a state where the image forming unit is operable, in a case where the detection unit detects the entry of the object into the detection region, after the job is received and then the range of the detection region is extended.

6. The image forming apparatus according to claim 5,
wherein the operation unit further includes a display unit that performs display of information related to formation of an image as the operation, and
the processor is configured to:
set the operation unit to be in a state where the display unit and the image forming unit are operable, in a case where the entry of the object into the detection region is detected until a predetermined period has elapsed after the job is received and then the range of the detection region is extended; and
set the operation unit to be in a state where the display unit is operable, in a case where the entry of the object into the detection region is detected after the period has elapsed.

7. The image forming apparatus according to any one of claims 1 to 6,
wherein the detection unit detects the entry of the object for each of a plurality of detection sections into which the detection region is divided, and
the processor is configured to:
extend the range of the detection region by the detection unit for each of the detection sections, in a case where the job is received.

8. The image forming apparatus according to claim 7,
wherein the detection sections for extending the range of the detection region are set in advance for each type of the job, and
the processor is configured to:
extend a range of the detection section that is set in advance, according to a type of the received job.

9. The image forming apparatus according to claim 8,
wherein the detection sections for extending the range of the detection region are set based on a history in which the detection unit has detected the entry of the object in a case where the job is received in the past.

10. The image forming apparatus according to claim 9, wherein the processor is configured to:
in a case where in a job of storing data used for forming an image in a predetermined storage region, an operation of forming the image based on the data is performed by the operation unit, after the data is stored in the storage region,
set the detection section in which the detection unit detects presence of the obj ect before the operation, as the detection section for extending the range of the detection region.

11. The image forming apparatus according to claim 7, wherein the processor is configured to:
set a range of the detection section to be narrow, in a case where the operation by the operation unit is not performed until a predetermined period has elapsed after the detection unit detects presence of the object in the extended detection section.

12. The image forming apparatus according to any one of claims 1 to 11, wherein the processor is configured to:
control the operation unit to be in a normal state where the operation is possible or a low power state where power consumption is lower than in the normal state; and
change the operation unit from the low power state to the normal state, in a case where the entry of the object into the detection region is detected in a state where the operation unit is controlled to be in the low power state.

13. The image forming apparatus according to claim 12, wherein the processor is configured to:
control the operation unit to a first low power state and a second low power state where power consumption is larger than in the first low power state as the low power state;
change the operation unit from the first low power state to the second low power state, in a case where the entry of the object into the extended detection region is detected in a state where the operation unit is controlled to be in the first low power state; and
change the operation unit from the second low power state to the normal state, in a case where the entry of the object into the detection region before the extension is detected in a state where the operation unit is controlled to be in the second low power state.
